# EUROPÄISCHE PATENTSCHRIFT

(11) **EP 1 017 544 B1**
(45) Veröffentlichungstag und Bekanntmachung des Hinweises auf die Patenterteilung: **26.11.2003**
(21) Anmeldenummer: 98917005.5
(22) Anmeldetag: 18.03.1998
(51) Int. Cl.: B25F 1/00, B60R 22/32

(54) **MULTIFUNKTIONALES RETTUNGSGERÄT**
MULTIFUNCTIONAL LIFE-SAVING DEVICE
DISPOSITIF DE SAUVETAGE MULTIFONCTIONNEL

(30) Priorität: 26.09.1997 DE 29717194 U
(43) Veröffentlichungstag der Anmeldung: 12.07.2000
(73) Patentinhaber: I.R.S. Insassen-Rettungssystem GmbH, 85092 Kösching (DE)
(72) Erfinder: SIGL, Kurt, D-85053 Ingolstadt (DE)
(74) Vertreter: Bergmeier, Werner, Dipl.-Ing.
(86) Internationale Anmeldenummer: EP9801593
(87) Internationale Veröffentlichungsnummer: WO99016587

(56) Entgegenhaltungen:
- DE-U- 29 500 650
- US-A- 5 630 242

## Beschreibung

Die Erfindung betrifft ein multifunktionales Rettungsgerät, insbesondere zur Befreiung von in einem Kraftfahrzeug eingeschlossenen und/oder angegurteten Insassen, welches ein Schlagstück, zum Beispiel zur Zertrümmerung der Scheibe und eine Schneidvorrichtung zum Zerschneiden der Gurte aufweist, gemäß Oberbegriff des Anspruchs 1.

Aus der DE 35 30 363 A1 ist ein gattungsgemäßes Rettungsgerät bekannt, welches an dem einen Ende eines stielförmigen Gehäuseteils nach Art einer Faust ein verbreitertes Gehäuseteil aufweist, in den von der einen Seite her ein bis zum Messer reichender Schlitz und auf der gegenüberliegenden Seite ein Schlagstück eingebracht ist. Dieses Rettungsgerät läßt sich wie ein üblicher Hammer benutzen, wobei der zu trennende Gurt in den bis zum Messer reichenden Einführungsschlitz gebracht wird und dort zertrennt wird. Nachteilig bei einer derartigen Ausführung ist es, daß es zwar im Einsatzfall gut bedient werden kann, aber das Messer ungesichert an dem Rettungsgerät angeordnet ist. Damit ist zu befürchten, daß bei einem Transport des Rettungsgerätes versehentlich Gegenstände an das Messer gelangen und diese beschädigen oder im Einzelfall sogar die Person, welche das Rettungsgerät mit sich führt, verletzt wird. Ein weiterer Nachteil ist, daß es durch die hammerförmige Ausgestaltung in seinen Ausmaßen relativ groß ausgeführt sein muß. Hierdurch ist es so groß, daß die Benutzer das Rettungsgerät nicht ständig mit sich führen können. Dadurch kann es geschehen, daß es sich gerade zu einem Zeitpunkt, zu welchem die Person das Rettungsgerät bräuchte, nicht in der Nähe des zu Rettenden befindet.

Aus der DE-GM 84 12 077 ist ein Rettungsgerät offenbart, das ein stielförmiges Gehäuse aufweist, dessen oberes Ende mit einem Schlagstück versehen ist. In einem spitzen Winkel rückspringenden und einen Schlitz bildenden Ansatz ist ein Messer angeordnet zum Zerschneiden des Gurtes. Das andere Ende weist einen ösenförmigen Zuggriff auf, weicher zum Bedienen des Messers beim Zerschneiden des Gurtes vorgesehen ist. Auch bei diesem Gerät besteht ebenso wie bei dem zuvor beschriebenen Rettungsgerät die Gefahr, daß versehentlich Gegenstände in den Schlitz eingeführt und von dem Messer beschädigt werden, da das Messer ungeschützt an dem Rettungsgerät angeordnet ist.

Der Schneidhammer der gattungsbildenden DE-U-295 00 650 stellt den am nächsten kommenden Stand der Technik dar. Der Schneidhammer besteht aus zwei Teilen, welche miteinander verbunden sind. Das eine Teil weist ein Schlagstück und das andere Teil eine aus dem Teil herausgearbeitete Schneide auf. Das Teil mit der Schneide kann ein oder mehrere Ringe zur Selbstverteidigung enthalten, mit denen ein Angreifer abgeschreckt werden soll. Nachteilig bei diesem Schneidhammer ist es, daß bei Einsatz nach einem Autounfall der Schneidhammer nicht schnell und ohne Überlegung gefunden und verwendet werden kann. Durch den Aufbau des Schneidhammers ist es für einen eingeklemmten Autofahrer erst erforderlich das komplette Gerät von einer Halterung zu lösen um an den Gurtschneider zu gelangen, mit dem er sich befreien kann. Dies ist auf Grund der eingeschränkten Bewegungsfreiheit des eingeklemmten Autofahrers nicht immer möglich.

Aufgabe der vorliegenden Erfindung ist es somit, ein multifunktionales Rettungsgerät zu schaffen, mit welchem bei Bedarf wenigstens ein Schlag- und Schneidegerät zur Verfügung steht, wobei das Schneidegerät geschützt in dem Rettungsgerät angeordnet ist und im Bedarfsfall schnell und zuverlässig einsetzbar ist.

Eine weitere Aufgabe der Erfindung ist es, ein Rettungsgerät zu schaffen, welches auf sehr kleinem Raum mehrere Funktionen vereint, so daß es problemlos von Personen jederzeit mit sich getragen werden kann, ohne die Gefahr einzugehen, daß sich die Person oder andere Gegenstände, welche die Person mit sich führt, durch das Rettungsgerät beschädigt werden.

Die Aufgabe wird gelöst durch die Merkmale des Anspruchs 1.

Ist an einem Ende des Rettungsgerätes das Schlagstück angeordnet, so dient der Rest des Gerätes vorteilhafterweise als Griffstück, mit welchem das Schlagstück bei Bedarf bedient werden kann. Erfindungsgemäß befindet sich > die Schneidvorrichtung in einem Hohlraum des Rettungsgerätes, aus welchem sie vor ihrem Einsatz bei Bedarf entfernbar ist. Dadurch wird die Schneidvorrichtung bei Nichtbedarf sicher aufbewahrt, ohne daß eine Verletzungsgefahr durch die Schneidvorrichtung besteht. Eine Verletzungsgefahr ist deshalb besonders groß, weil die Schneidvorrichtung, welche beispielsweise zum Zerschneiden der Gurte in einem Kraftfahrzeug eingesetzt werden soll, sehr scharf ausgebildet ist. Würde die Schneidvorrichtung offen an dem Rettungsgerät angeordnet sein, so würde bei einer derartig scharf ausgebildeten Schneidvorrichtung die Gefahr einer Verletzung der das Rettungsgerät mit sich führenden Person zu befürchten sein. Auch würde die Gefahr bestehen, daß die Schneidvorrichtung andere Gegenstände zerstört, weiche sich beim Mitführen in der Nähe des Rettungsgerätes befinden. Der Hohlraum des Rettungsgerätes kann als Schlitz ausgebildet sein, in welchem die. Schneidvorrichtung versenkbar ist. Es ist ebenso eine Ausführung möglich, in welcher der Hohlraum in Art einer Kappe oder einer Hülse über die Schneidvorrichtung gesteckt oder geschraubt ist, wodurch die Schneidvorrichtung sicher vor Kontakt mit anderen Gegenständen geschützt ist. Bei Bedarf wird die Hülse oder Kappe von der Schneidvorrichtung entfernt oder die Schneidvorrichtung aus dem schlitzförmigen Hohlraum des Rettungsgerätes geklappt oder gezogen.

Ist das Rettungsgerät im wesentlichen stielförmig ausgebildet, so nimmt es einen kleinen Bauraum ein und ist dadurch problemlos durch Personen mitführbar. Außerdem ermöglicht die stielförmige Ausbildung des Rettungsgeräts eine gute Bedienung einerseits zum Zertrümmern der Scheibe und andererseits zum Zerschneiden von Gurten, da es gut und griffig in der Hand liegt.

Das Rettungsgerät ist wenigstens zweiteilig ausgebildet. Dadurch wird ein Schutz der Schneidvorrichtung dadurch bewirkt, daß eine Kappe oder Hülse über die Schneidvorrichtung gesteckt wird, wenn sie nicht benötigt wird, und diese Kappe oder Hülse einfach und schnell bei Bedarf von der Schneidvorrichtung entfernt werden kann.

Werden die beiden Teile ineinander gesteckt, so ist durch eine entsprechende Klemmverbindung ebenfälls ein sicherer Schutz der Schneidvorrichtung gegeben und andererseits ein sehr schnelles Entfernen der Schutzeinrichtung von der Schneidvorrichtung im Bedarfsfall gewährleistet.

Bei derartigen zweiteiligen Ausführungen ist die Schneidvorrichtung an dem ersten Teil angeordnet. Das zweite Teil weist den Hohlraum auf, welcher die Schneidvorrichtung im Nichtbedarfsfall aufnimmt.

In einer vorteilhaften Ausgestaltung ist die Schneidvorrichtung schwenkbar oder verschiebbar mit dem Rettungsgerät verbunden. Durch eine Schwenkbewegung oder eine Schiebbewegung wird die Schneidvorrichtung in dem Hohlraum des Rettungsgerätes versenkt und ist dadurch geschützt aufbewahrt.

Als vorteilhaft hat sich eine Schneidvorrichtung erwiesen, welche ein hakenförmiges Messer aufweist. Durch das hakenförmige Messer ist ein automatisches Einfädeln des Gurtes in dem Messer gewährleistet, wodurch ein sicheres und schnelles Durchtrennen des Gurtes möglich ist.

Am ersten Teil ist die Schneidvorrichtung und am zweiten Teil das Schlagstück angeordnet. Es ist damit möglich, daß unterschiedliche Materialien in dem Rettungsgerät verwendet werden können. So ist es besonders vorteilhaft, wenn wenigstens eines der Teile des Rettungsgerätes, insbesondere das Schlagstück aus Stahl gefertigt ist. Durch diese große Masse des Rettungsgerätes ist ein sicheres Durchschlagen der Scheibe im Rettungsfall möglich. Ein anderes Teil des Rettungsgerätes kann beispielsweise aus Aluminium gefertigt sein, wodurch ein Mitführen des Rettungsgerätes ermöglicht wird, da es insgesamt nicht zu schwer ist.

Um das Rettungsgerät stets einsatzbereit zu haben, ist es vorteilhaft, wenn es mit einem Magneten versehen ist, womit es an einem Metall, insbesondere im Kraftfahrzeug befestigt werden kann. Eine weitere Befestigungsmöglichkeit besteht darin, daß das Rettungsgerät eine durchgehende, quer zur Längsachse verlaufende Bohrung aufweist, mit welchem das Rettungsgerät an einem Schlüsselanhänger befestigt werden kann. Aufgrund der kompakten und kleinen Ausführung des Rettungsgerätes, das durch die Aufbewahrung der Schneidvorrichtung in dem Hohlraum des Rettungsgerätes ermöglicht ist, hat es sich als besonders vorteilhaft erwiesen, daß das Rettungsgerät als Schlüsselanhänger ausgebildet ist.

Um eine zuverlässige Zerstörung der Scheibe des Kraftfahrzeugs zu gewährleisten, ist es vorteilhaft, wenn das Schlagstück ein scharfkantiges oder spitzes, im wesentlichen konisch ausgebildetes Ende aufweist. Mit dieser Kante oder Spitze ist eine Zerstörung der Scheibe auch mit wenig Kraftaufwand möglich. Dadurch ist es vorteilhafterweise auch ohne Gefahr einer Verletzung der das Rettungsgerät bedienenden Person möglich, die Scheibe zu zerschlagen.

Um ein Abrutschen der das Rettungsgerät führenden Hand zu vermeiden, ist es vorteilhaft, wenn die Teile des Rettungsgerätes griffige Oberflächen, wie zum Beispiel Raster, Nuten oder Stege aber auch eine gleichwirkende Rändelung aufweisen. Dadurch ist einerseits sichergestellt, daß das Rettungsgerät beim Zerschlagen der Scheibe und dem Zerschneiden des Gurtes sicher in der Hand zu halten und zu führen ist, andererseits ist es auch vorteilhaft, daß durch die entsprechende griffige Oberfläche ein schnelles Zerlegen des Rettungsgerätes bzw. Freilegen der Schneidvorrichtung gewährleistet ist.

Um das Rettungsgerät noch vielseitiger einsetzen zu können, und um für den Benutzer auch einen Anreiz zu schaffen das Rettungsgerät ständig bei sich zu führen, kann vorgesehen sein, daß in dem Rettungsgerät zusätzlich eine Leuchte angeordnet ist. Als besonders vorteilhaft hat sich erwiesen, wenn diese Leuchte in dem dem Schlagstück abgewandten Ende des Rettungsgerätes sich befindet. Dadurch ist eine unabhängige Gestaltung der Schlagstückseite und der Leuchtenseite ermöglicht. Das Rettungsgerät selbst kann derart ausgebildet sein, daß es vorteilhafterweise in dem einen Teil des Rettungsgerätes eine Öffnung zur Aufnahme einer Batterie aufweist, welche zum Betreiben der Leuchte vorgesehen ist. Das Teil kann weiterhin einen Schalter aufweisen, durch weichen die Leuchte in Betrieb gesetzt wird. Der Schalter kann entweder als Schiebeschalter ausgebildet sein, oder auch durch Verdrehen der Teile bei einer mehrteiligen Ausführung des Rettungsgerätes.

Das Rettungsgerät kann auch für die Aufnahme einer Selbstverteidigungseinrichtung dienen. Hierzu kann vorgesehen sein, daß in einem Hohlraum des Rettungsgerätes eine Gaspatrone mit einer Auslöseeinrichtung angeordnet ist. Vorteilhafterweise ist in einem der Teile eine Ausströmöffnung vorgesehen, durch welche das aus der Gaspatrone freigesetzte Gas ausströmen kann. Eine derartige Selbstverteidigungseinrichtung kann vorteilhafterweise eingesetzt werden zur Abwehr von Angreifern, welche durch den Gaseinsatz vertrieben werden.

Als Selbstverteidigungseinrichtung kann auch vorgesehen sein, daß das Rettungsgerät eine Elektroschockeinrichtung aufweist, welche bei einer Freischaltung einen Angreifer mittels Elektroschock in die Flucht schlägt.

Das erfindungsgemäße multifunktionale Rettungsgerät ist somit vielseitig einsetzbar. Es ist nicht auf die im folgenden beschriebenen Ausführungsbeispiele beschränkt. So kann die Erfindung durchaus auch andersartig, beispielsweise in eckiger Ausgestaltung oder mit Griffleisten versehene Oberflächen vorgesehen sein.

Weitere Vorteile der Erfindung sind in den folgenden Ausführungsbeispielen dargestellt. Es zeigt
- **Figur 1**: ein erfindungsgemäßes zweiteiliges Rettungsgerät mit einer Kappe
- **Figur 2**: ein Rettungsgerät mit klappbarer Schneidvorrichtung, das nicht Gegenstand der Erfindung ist.
- **Figur 3**: ein erfindungsgemäßes Rettungsgerät mit Leuchte
- **Figur 4**: ein Rettungsgerät mit Selbstverteidigungseinrichtung, das nicht Gegenstand der Erfindung ist.
- **Figur 5**: ein Rettungsgerät mit verschiebbarer Schneidvorrichtung, das nicht Gegenstand der Erfindung ist.

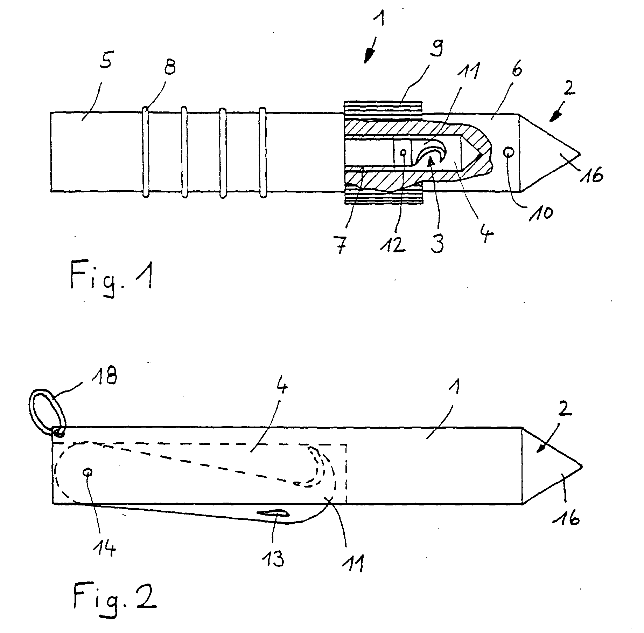

In Figur 1 ist ein erfindungsgemäßes Rettungsgerät 1 dargestellt, welches aus einem ersten Teil 5 und einem zweiten Teil 6 besteht. In dem ersten Teil 5 ist eine Schneidvorrichtung 3 angeordnet. Die Schneidvorrichtung 3 ist in einem Hohlraum 4 des zweiten Teils 6 geschützt angeordnet. Damit wird sichergestellt, daß eine Verletzung oder Beschädigung durch die Schneidvorrichtung 3 sicher vermieden wird. Das zweite Teil 6 weist ein Schlagstück 2 auf, welches an einem Ende ein konisches Ende 16 hat. Das konische Ende 16 dient einer sicheren Zerstörung einer Scheibe im Einsatzfall. Im zweiten Teil 6 ist eine Bohrung 10 vorgesehen, durch welche ein Ring eines Schlüsselbundes geführt werden kann. Dadurch ist die sichere Aufbewahrung des Rettungsgerätes 1 ermöglicht. Außerdem ist sichergestellt, daß im Bedarfsfall das Rettungsgerät 1 stets zur Hand ist, wenn mittels der Bohrung 10 das Rettungsgerät 1 am Autoschlüsselbund befestigt ist.

Erstes Teil 5 und zweites Teil 6 sind mittels eines Gewindes 7 miteinander verbunden. Durch eine Verdrehung vom ersten Teil 5 und zweiten Teil 6 gegeneinander ist ein Freilegen der Schneidvorrichtung 3 schnell zu bewerkstelligen. Um eine griffige Oberfläche vom ersten Teil 5 und zweiten Teil 6 zu erzielen, ist beim ersten Teil 5 eine Mehrzahl von Stegen 8 angeordnet. Diese Stege 8 bewirken, daß die das Rettungsgerät 1 führende Hand bei einer Schlagbewegung nicht von dem Rettungsgerät 1 abrutscht. Eine Rändelung 9 an dem zweiten Teil 6 ist derart ausgebildet, daß ein sicheres Verdrehen von erstem Teil 5 und zweitem Teil 6 gegeneinander erfolgen kann, ohne daß die Hand bzw. die Finger abrutschen.

An dem ersten Teil 5 ist die Schneidvorrichtung 3 angeordnet. Im vorliegenden Fall besteht die Schneidvorrichtung 3 aus einem Messer 11, weiches eine hakenförmige Klinge aufweist. Das Messer 11 ist mittels eines Stiftes 12 mit dem ersten Teil 5 verbunden. Der Hohlraum 4 in dem zweiten Teil 6 ist derart ausgebildet, daß er das Messer 11 vollständig aufnehmen kann. Der Stift 12 stellt sicher, daß bei einer Schneidbewegung, mit weicher der Gurt in der hakenförmigen Klinge des Messers 11 eingefangen und zerschnitten wird, das Messer 11 nicht aus dem ersten Teil 5 herausgerissen wird.

Die Stege 8 können entweder aus dem Material des ersten Teils 5 herausgeformt sein, oder es können aber auch Gummiringe sein, welche über das erste Teil 5 gestülpt sind und in kleinen Nuten des ersten Teiles 5 arretiert sind.

Als vorteilhaft hat sich erwiesen, wenn das erste Teil 5 aus Aluminium hergestellt ist und das zweite Teil 6 aus Stahl. Es ist damit ein guter Kompromiß zwischen Gewicht des Rettungsgerätes 1, welches nicht zu hoch sein sollte und andererseits einer schlagkräftigen Masse und Widerstandskraft des Schlagstückes 2 béim Zertrümmern der Scheibe gewährleistet.

Versuche haben ergeben, daß auch ein in der Nähe der konischen Spitze 16 des Schlagstückes 2 befindlicher Schlüsselbund ein Zerstören der Scheibe zuläßt. Durch die konische Ausgestaltung des Schlagstückes 2 ist nämlich auch schon mit sehr geringem Kraftaufwand eine Zerstörung von üblichen Fahrzeugscheiben möglich.

In Figur 2 ist in einem Rettungsgerät 1 an einem Ende ein Schlagstück 2 integriert. Das Schlagstück 2 besteht im wesentlichen aus einem konisch verlaufenden Ende 16 mit einer scharfen Spitze zum Zertrümmern der Scheibe. Das Rettungsgerät weist einen Hohlraum 4 auf, in welchem das Messer 11 teilweise versenkt ist. Der Hohlraum 4 ist bei diesem Ausführungsbeispiel als länglicher Schlitz in dem Rettungsgerät 1 ausgebildet. Um eine Drehachse 14 ist das Messer 11 schwenkbar, in der dargestellten Stellung, des Messers 11 befindet sich das Messer 11 in der geschützten Stellung. Nach einer Drehung um die Achse 14 ist das Messer 11 in axialer Verlängerung des Rettungsgerätes 1 ausgeklappt. Um das Messer 11 aus der dargestellten Position in die ausgeklappte Position bewegen zu können, ist ein Eingriff 13 an der Klinge des Messers 11 vorgesehen. An diesem Eingriff 13 kann das Messer 11 ergriffen und aus dem Hohlraum 4 bewegt werden.

Vorteilhafterweise ist in eingeklapptem Zustand die gebogene Klinge des Messers 11 in Richtung auf den Grund des Hohlraums 4 gerichtet. Damit ist ein zusätzlicher Schutz vor Verletzung gewährleistet.

Um das Rettungsgerät 1 bequem mit sich führen zu können, ist ein Ring 18 vorgesehen. Das Rettungsgerät 1 kann mittels des Ringes 18 an einem Schlüsselbund oder einer Kette befestigt werden oder es kann im Kraftfahrzeug an einem Haken angehängt werden, so daß es jederzeit griffbereit ist.

Das Messer 11 kann mittels einer nicht dargestellten Feder gesichert werden, daß es nicht unbeabsichtigt aus dem Hohlraum 4 herausklappt. Die Feder kann außerdem dazu dienen, daß das Messer 11 in ausgeklappter Stellung stabil positioniert werden kann.

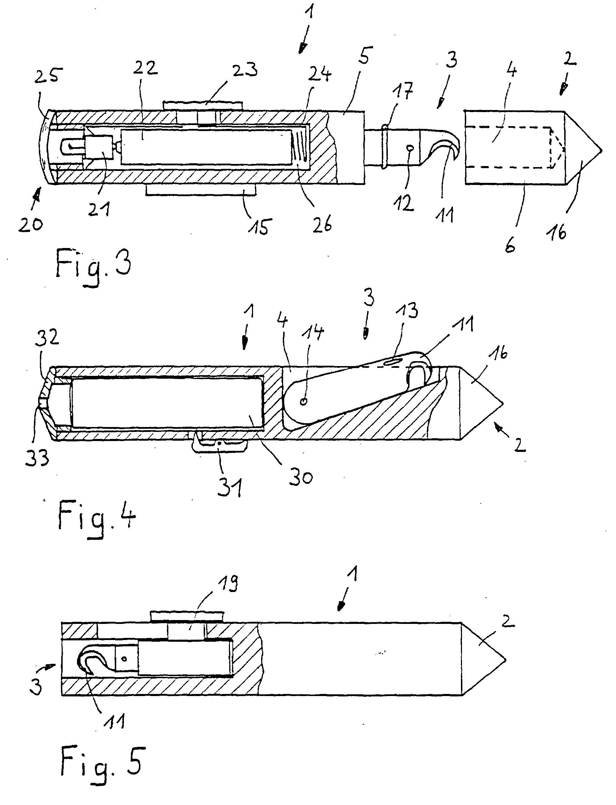

Figur 3 zeigt ein erfindungsgemäßes Rettungsgerät 1 mit einer integrierten Leuchte 20. Die Leuchte 20 ist in dem ersten Teil 5 des Rettungsgerätes 1 angeordnet. Das erste Teil 5 dient gleichzeitig als Griffstück für das Schlagstück 2.

Die Leuchte 20 weist eine Lampe 21, vorzugsweise eine Halogenlampe, und eine Batterie 22 auf. Lampe 21 und Batterie 22 sind in einem Hohlraum 26 angeordnet. In dem Hohlraum 26 ist weiterhin eine Kontaktleitung 24 untergebracht, welche Strom der Lampe 21 zuführt. Die Stromzufuhr kann mittels des Schalters 23 unterbrochen werden. Lampe 21 und Batterie 22 sind im vorliegenden Ausführungsbeispiel mittels der Glasabdeckung 25 aneinandergepreßt. Die Glasabdeckung 25 ist hierzu in das erste Teil 5 eingeschraubt.

Das erste Teil 5 weist zusätzlich einen Magneten 15 auf. Mittels des Magneten 15 kann das Rettungsgerät 1 an einem metallischen Körper angeordnet werden. Dies ist besonders für die Anbringung in einem Kraftfahrzeug sehr vorteilhaft.

Das zweite Teil 6 des Rettungsgerätes 1 dient gleichzeitig als Kappe für die Schneidvorrichtung 3 und als Schlagstück 2. In dem zweiten Teil 6 ist der Hohlraum 4 angeordnet, welcher über die Schneidvorrichtung 3 gesteckt wird. Die Schneidvorrichtung 3 wird beim vorliegenden Ausführungsbeispiel mittels des zweiten Teils 6 derart verdeckt, daß das zweite Teil 6 lediglich über einen Gummiring 17 geschoben wird. Hierdurch wird ein ausreichend fester Sitz mit einer Verbindung vom ersten Teil 5 und zweiten Teil 6 bewirkt. Vorteilhaft bei dieser Ausführung ist es, daß die beiden Teile sehr schnell voneinander getrennt werden können, so daß die Schneidvorrichtung 3 sehr schnell eingesetzt werden kann.

Das Messer 11 der Schneidvorrichtung 3 ist wiederum gebogen, so daß eine sichere Führung beim Durchtrennen des Gurtes erfolgt. Um ein Lösen des Messers 11 von dem ersten Teil 5 zu vermeiden, ist das Messer 11 mittels eines Stiftes 12 an dem ersten Teil 5 gesichert.

In Figur 4 ist ein Rettungsgerät 1 dargestellt, welches eine Selbstverteidigungseinrichtung beinhaltet. Die Selbstverteidigungseinrichtung besteht aus einer Gaspatrone 30 und einer Auslöseeinrichtung 31, welche lediglich schematisch dargestellt ist. Die Gaspatrone 30 ist in einem Hohlraum des Rettungsgerätes 1 angeordnet und mittels eines Deckels 32 dort gesichert. Der Deckel 32 weist eine Ausströmöffnung 33 auf, aus welcher bei Bedarf und nach Auslösen der Gaspatrone 30 Gas ausströmt. Ein derartiges Rettungsgerät 1 kann sehr vorteilhaft sein bei Angriffen und schreckt die Angreifer durch das austretende Gas in die Flucht. Dadurch, daß das Rettungsgerät 1 vielseitig anwendbar ist und nur kleinen Bauraum einnimmt, kann es jederzeit von dem Benutzer mitgenommen werden. Es ist daher auch bei derartigen Angriffen jederzeit verfügbar.

Die Selbstverteidigungseinrichtung ist an dem dem Schlagstück 2 abgewandten Ende des Rettungsgerätes 1 angeordnet, wodurch eine unabhängige Gestaltung von Schlagstück 2 und Selbstverteidigungseinrichtung möglich ist.

Die Schneidvorrichtung 3 der Figur 4 ist in einem Hohlraum 4 des Rettungsgerätes 1 versenkt. Über eine Achse 14 und einen Eingriff 13 ist die Schneidvorrichtung 3 mit ihrem Messer 11 aus diesem Hohlraum 4 schwenkbar. Das Messer 11 steht dann im Gegensatz zu den vorherigen Ausführungsbeispielen im wesentlichen rechtwinklig von der Längsachse des Rettungsgerätes 1 ab. Das Rettungsgerät 1 kann dadurch in Form eines T-Stückes, ähnlich eines Korkenziehers, in die Hand des Benutzers genommen werden. Hierdurch ist ein noch besserer Griff des Rettungsgerätes 1 bewirkt, wodurch noch mehr Kraft beim Zerschneiden des Gurtes aufbringbar ist.

Figur 5 stellt ein Rettungsgerät 1 mit einem Schlagstück 2 dar, weiches in einem Hohlraum eine Schneidvorrichtung 3 integriert hat. Die Schneidvorrichtung 3 mit dem Messer 11 ist entlang der Längsachse des Rettungsgerätes 1 verschiebbar angeordnet. Die Schneidvorrichtung 3 wird dabei mittels eines Schiebers 19, welcher von der Außenseite des Rettungsgerätes 1 bedienbar ist, bewegt. Bei Bedarf wird durch die Längsbewegung des Schiebers 19 die Schneidvorrichtung 3 aus dem Hohlraum des Rettungsgerätes 1 bewegt und kann dadurch schnell zum Einsatz gelangen. Eine Arretierung der Schneidvorrichtung 3 kann mittels nicht dargestellter Rasten erfolgen, welche bei Betätigung des Schiebers 19 beispielsweise durch Niederdrücken des Schiebers 19 außer Funktion gesetzt werden.

Ungeachtet von der Erfindung sind auch verschiedene Formgebungen, wie runde oder unrunde Querschnitte des Rettungsgerätes 1 sowie andere Formabweichungen möglich. Ebenso kann das Messer 11 anders als bogenförmig, zum Beispiel länglich oder mit Einführschlitz ausgebildet sein. Wichtig dabei ist jedenfalls ein sicheres und schnelles Zerschneiden des Gurtes.

Die Verbindung vom ersten Teil 5 und zweiten Teil 6 kann auch mittels eines Nutsteckers erfolgen. Hierbei wird ein Stift, z. B. des ersten Teils 5, in einer abgewinkelten Nut des zweiten Teils 6 geführt, so daß nach einer Verdrehung der beiden Teile 5 und 6 eine Verriegelung bzw. Entriegelung der beiden Teile 5 und 6 erfolgt.

## Patentansprüche

1. Multifunktionales Rettungsgerät, insbesondere zur Befreiung von in einem Kraftfahrzeug eingeschlossenen und/oder angegurteten Insassen, welches ein Schlagstück (2), zum Beispiel zur Zertrümmerung der Scheibe und eine Schneidvorrichtung (3) zum Zerschneiden der Gurte aufweist und wobei am einen Ende des Rettungsgerätes (1) das Schlagstück (2) angeordnet ist und die Schneidvorrichtung (3) sich in einem Hohlraum (4) des Rettungsgerätes (1) befindet, aus welchem sie vor ihrem Einsatz bei Bedarf entfernbar ist, daß das Rettungsgerät (1) wenigstens zweiteilig ausgebildet ist, und daß die beiden Teile (5,6) ineinander gesteckt sind, so daß sie sehr schnell voneinander getrennt werden können, **dadurch gekennzeichnet, daß** in dem das Schlagstück (2) aufweisenden zweiten Teil (6) eine Bohrung (10) angeordnet ist zur Befestigung des Rettungsgerätes (1) an einem Schlüsselbund, daß die Bohrung (10) durch das Rettungsgerät (1) durchgehend und quer zur Längsachse verlaufend angeordnet ist, daß die Schneidvorrichtung (3) in dem von der Bohrung (10) abgewandten ersten Teil (5) des Rettungsgerätes (1) angeordnet ist und ein Messer (11) aufweist, welches mittels eines Stiftes (12) an dem ersten Teil (5) gesichert ist.

2. Rettungsgerät nach Anspruch 1, **dadurch gekennzeichnet, daß** das Rettungsgerät (1) im wesentlichen stielförmig ausgebildet ist.

3. Rettungsgerät nach einem der Ansprüche 1 bis 2, **dadurch gekennzeichnet, daß** die Schneidvorrichtung (3) durch das zweite, den Hohlraum (4) aufweisende Teil (6) abgedeckt ist.

4. Rettungsgerät nach einem der Ansprüche 1 bis 3, **dadurch gekennzeichnet, daß** die Schneidvorrichtung (3) schwenkbar oder schiebbar mit dem Rettungsgerät (1) verbunden ist

5. Rettungsgerät nach einem der Ansprüche 1 bis 4, **dadurch gekennzeichnet, daß** die Schneidvorrichtung (3) ein hakenförmiges Messer ist.

6. Rettungsgerät nach einem der Ansprüche 1 bis 5, **dadurch gekennzeichnet, daß** das Rettungsgerät (1) einen Magneten (15) zur Befestigung an einem Metall insbesondere des Kraftfahrzeuges aufweist.

7. Rettungsgerät nach einem der Ansprüche 1 bis 6, **dadurch gekennzeichnet, daß** wenigstens eines der Teile (5,6) des Rettungsgerätes (1) aus Stahl ist.

8. Rettungsgerät nach einem der Ansprüche 1 bis 7, **dadurch gekennzeichnet, daß** das Schlagstück (2) ein scharfkantiges oder spitzes, im wesentlichen konisch ausgebildetes Ende aufweist.

9. Rettungsgerät nach einem der Ansprüche 1 bis 8, **dadurch gekennzeichnet, daß** die Teile (5,6) griffige Oberflächen, wie zum Beispiel Riefen, Nuten oder Stege aufweisen.

10. Rettungsgerät nach einem der Ansprüche 1 bis 9, **dadurch gekennzeichnet, daß** in dem dem Schlagstück (2) abgewandten Ende des Rettungsgerätes (1 ) eine Leuchte (20) angeordnet ist.

11. Rettungsgerät nach Anspruch 10, **dadurch gekennzeichnet, daß** in dem ersten Teil (5) eine Batterie (22) zum Betreiben der Leuchte (20) und ein Schalter (23) angeordnet sind.

12. Rettungsgerät nach einem der Ansprüche 1 bis 11, **dadurch gekennzeichnet, daß** in dem ersten Teil (5) des Rettungsgerätes (1) eine Selbstverteidigungseinrichtung angeordnet ist.

13. Rettungsgerät nach Anspruch 12, **dadurch gekennzeichnet, daß** die Selbstverteidigungseinrichtung eine Gaspatrone (30) mit einer Auslöseeinrichtung (31) ist, wobei eine Ausströmöffnung (33) für das Gas in dem ersten Teil (5) vorgesehen ist.

14. Rettungsgerät nach Anspruch 13, **dadurch gekennzeichnet, daß** die Selbstverteidigungseinrichtung eine Elektroschockeinrichtung ist.

## Claims

1. Multifunctional life-saving device designed in particular for rescuing occupants trapped and/or fastened in seat belt in a motor vehicle, which features an impact striking piece (2), for example for smashing the window/windscreen and a cutting facility (3) to cut the seat belts, with the impact striking piece (2) arranged at one end of the life-saving device (1) and the cutting facility (3) located in a cavity (4) of the life-saving device (1) from which it can be removed as required before use, that the life-saving device (1) is of at least 2-piece design and that the two parts (5, 6) fit into each other such that they can be quickly separated, **characterized such that** a hole (10) is arranged in the second part (6) facing towards the impact striking piece (2) for the purpose of fastening and securing the life-saving device (1) to a bunch of keys, that the hole (10) is arranged such that it passes through the life-saving device (1) and is positioned transversely with respect to the longitudinal axis, that the cutting facility (3) is arranged in the first part (5) of the life-saving device (1) facing away from the hole (10) and features a cutting blade (11 ) which is secured to the first part (5) by means of a pin (12).

2. Life-saving device in accordance with Patent Claim 1, **characterized such that** the life-saving device (1) is essentially of stick-like design.

3. Life-saving device in accordance with one of the Patent Claims 1 to 2, **characterized such that** the cutting facility (3) is covered by the second part (6) facing towards the cavity (4).

4. Life-saving device in accordance with one of the Patent Claims 1 to 3, **characterized such that** the cutting facility (3) is connected to the life-saving device (1) such that it can be swivelled or slid.

5. Life-saving device in accordance with one of the Patent Claims 1 to 4, **characterized such that** the cutting facility (3) features a hook-shaped cutting blade.

6. Life-saving device in accordance with one of the Patent Claims 1 to 5, **characterized such that** the life-saving device (1) features a magnet (15) for securing it to a metal object in particular the motor vehicle.

7. Life-saving device in accordance with one of the Patent Claims 1 to 6, **characterized such that** at least one of the parts (5, 6) of the life-saving device (1) is made of steel.

8. Life-saving device in accordance with one of the Patent Claims 1 to 7, **characterized such that** the impact striking piece (2) features a sharp-edged or pointed, essentially conical end.

9. Life-saving device in accordance with one of the Patent Claims 1 to 8, **characterized such that** the parts (5, 6) feature surfaces such as flutes, grooves or knurls that afford a good grip.

10. Life-saving device in accordance with one of the Patent Claims 1 to 9, **characterized such that** a light (20) is arranged in the end of the life-saving device (1) facing away from the impact striking piece (2).

11. Life-saving device in accordance with Patent Claim 10, **characterized such that** a battery (22) for operating the light (20) and a switch (23) are arranged in the first part (5).

12. Life-saving device in accordance with one of the Patent Claims 1 to 11, **characterized such that** a self-defence facility is arranged in the first part (5) of the life-saving device (1 ).

13. Life-saving device in accordance with Patent Claim 12, **characterized such that** the self-defence facility is a gas cartridge (30) with a triggering facility (31) with a gas outlet opening (33) provided in the first part (5).

14. Life-saving device in accordance with Patent Claim 13, **characterized such that** the self-defence facility is designed as an electric shock facility.

## Revendications

1. Dispositif de sauvetage multifonctionnel, destiné notamment à l'évacuation de passagers coincés et/ou attachés dans un véhicule, comportant une pièce à percuter (2) permettant, par exemple, de briser les glaces, et un dispositif de coupe (3) permettant de couper les ceintures de sécurité, sachant que la pièce à percuter (2) est agencée à l'une des extrémités du dispositif de sauvetage multifonctionnel (1) et que le dispositif de coupe (3) est logé dans une cavité (4) du dispositif de sauvetage multifonctionnel (1), à partir de laquelle, avant son utilisation, il peut être sorti en cas de besoin, sachant que le dispositif de sauvetage multifonctionnel (1) est réalisé en deux parties au moins et que les deux parties (5, 6) sont enfoncées l'une dans l'autre de manière à ce qu'elles puissent être détachées très rapidement l'une de l'autre, **caractérisé en ce que** la deuxième partie (6) comportant la pièce à percuter (2) est dotée d'un orifice (10) permettant de suspendre le dispositif de sauvetage multifonctionnel (1) à un trousseau de clés, **caractérisé en ce que** l'orifice (10), continu, en agencé dans le sens perpendiculaire à l'axe de du dispositif de sauvetage multifonctionnel (1 ), **caractérisé en ce que** le dispositif de coupe (3) est logé dans la partie (5) du dispositif de sauvetage multifonctionnel (1) éloignée de l'orifice (10) et qu'elle comporte un couteau (11), qui est bloqué au moyen d'une goupille (12) sur la première partie (5).

2. Dispositif de sauvetage multifonctionnel selon la revendication 1, **caractérisé en ce que** le dispositif de sauvetage multifonctionnel est essentiellement réalisé en la forme d'une tige.

3. Dispositif de sauvetage multifonctionnel selon l'une quelconque des revendications 1 à 2, **caractérisé en ce que** le dispositif de coupe (3) est recouvert par la deuxième partie (6) comportant la cavité (4).

4. Dispositif de sauvetage multifonctionnel selon l'une quelconque des revendications 1 à 3, **caractérisé en ce que** le dispositif de coupe (3) est assemblé au dispositif de sauvetage multifonctionnel (1) dune manière permettant son pivotement ou son coulissement.

5. Dispositif de sauvetage multifonctionnel selon l'une quelconque des revendications 1 à 4, **caractérisé en ce que** le dispositif de coupe (3) est un couteau en forme de crochet.

6. Dispositif de sauvetage multifonctionnel selon l'une quelconque des revendications 1 à 5, **caractérisé en ce que** le dispositif de sauvetage multifonctionnel (1) comporte un aimant (15) permettant de le fixer à une pièce métallique, notamment dans un véhicule.

7. Dispositif de sauvetage multifonctionnel selon l'une quelconque des revendications 1 à 6, **caractérisé en ce que** l'une au moins des parties (5, 6) du dispositif de sauvetage multifonctionnel (1) est réalisée en acier.

8. Dispositif de sauvetage multifonctionnel selon l'une quelconque des revendications 1 à 7, **caractérisé en ce que** la pièce à percuter (2) comporte une extrémité à arêtes vives ou pointues, réalisée en forme essentiellement conique.

9. Dispositif de sauvetage multifonctionnel selon l'une quelconque des revendications 1 à 8, **caractérisé en ce que** les parties (5, 6) comportent des surfaces maniables telles que des raies, des rainures ou des crampons.

10. Dispositif de sauvetage multifonctionnel selon l'une quelconque des revendications 1 à 9, **caractérisé en ce que** le dispositif de sauvetage multifonctionnel (1) comporte une lampe (20) en son extrémité éloignée de la pièce à percuter (2).

11. Dispositif de sauvetage multifonctionnel selon la revendication 10, **caractérisé en ce que** la première partie (5) comporte une pile (22) permettant d'utiliser la lampe (20) et un interrupteur (23).

12. Dispositif de sauvetage multifonctionnel selon l'une quelconque des revendications 1 à 11, **caractérisé en ce que** la première partie (5) du dispositif de sauvetage multifonctionnel (1) comporte un dispositif d'autodéfense.

13. Dispositif de sauvetage multifonctionnel selon la revendication 12, **caractérisé en ce que** le dispositif d'autodéfense est une cartouche de gaz (30) avec un dispositif de déclenchement (31), sachant qu'un orifice d'émanation (33) du gaz est prévu dans la première partie (5).

14. Dispositif de sauvetage multifonctionnel selon la revendication 13, **caractérisé en ce que** le dispositif d'autodéfense est un dispositif à électrochocs.
